# EUROPEAN PATENT APPLICATION

(11) **EP 1 681 114 A1**
(43) Date of publication of application: **19.07.2006**
(21) Application number: 04787777.4
(22) Date of filing: 09.09.2004
(51) Int. Cl.: B22D 11/10, B22D 41/46, C04B 35/66

(54) **FILLER FOR LADLE SLIDING AND OPENING/CLOSING DEVICE**

(30) Priority: 12.09.2003 JP 2003321750
(71) Applicant: Yamakawa Sangyo Co., Ltd., Amagasaki-shi, Hyogo 660-0805 (JP); NIPPON ROTARY NOZZLE CO.,LTD., Yokohama-shi, Kanagawa 230-0044 (JP); JFE Steel Corporation, Tokyo, 100-0011 (JP)
(72) Inventor: OHASHI, Akira, Amagasaki-shi, Hyogo 660-0805 (JP); KAWAKAMI, Manabu, Amagasaki-shi, Hyogo 660-0805 (JP); TAKASUGI, Hideto, NIPPON ROTARY NOZZLE CO., LTD, Yokohama-shi, Kanagawa 230-0044 (JP); ISHII, Takeshi, c/o JFE Steel Corporation, Tokyo 100-0011 (JP); KOHIRA, Satoshi, c/o JFE Steel Corporation, Tokyo 100-0011 (JP); TAIRA, Masao, c/o JFE Steel Corporation, Tokyo 100-0011 (JP); TANO, Manabu, c/o JFE Steel Corporation, Tokyo 100-0011 (JP)
(74) Representative: Bolinches, Michel Jean-Marie
(86) International application number: PCT/JP2004/013113
(87) International publication number: WO 2005/025777

(57) **Abstract**

A filler for a ladle tap hole valve, **characterized by** comprising a sand and a feldspar to be externally added and mixed together so that the total quantity of alkalis in the filler is 0.3 to 1.5 mass %, the feldspar having a particle size distribution of 0.3 to 1.7 mm, the sand being composed of 40 to 100 mass % of silica sand having a particle size distribution of 0.3 to 1.7 mm and 60 to 0 mass % of chromite sand having a particle size distribution of 0.1 to 0.85 mm.

## Description

### Technical Field

The present invention relates to a filler for a ladle tap hole valve. More particularly, it relates to a filler for a ladle tap hole valve which is hardly melted, sintered or penetrated by molten steel poured into a ladle in a steelmaking process and therefore is easily discharged into a tundish to let the molten steel through the device.

### Background Art

A ladle receiving molten steel in a steelmaking process is conventionally provided with a ladle tap hole valve (a sliding nozzle or a rotary nozzle). The ladle with the ladle tap hole valve is required to be filled with a filler comprising refractory powders before receiving molten steel to prevent the molten steel from solidifying within the nozzle.

As a filler, natural silica sand, chromite sand, zircon sand, alumina sand and the like are known. Among these, the natural silica sand, the chromite sand and a mixture of these are often used as a filler.

In general, a thick sintered layer that causes non-free-opening of the ladle relatively is formed when the natural silica sand is used as a filler. Since such non-free-opening prevents the molten steel discharging from the ladle, workers have been forced to clean the nozzle by oxygen lancing, inserting a pipe to the nozzle.

Such a work not only lowers the temperature of the molten steel but also is extremely dangerous, and in view of inhibiting labor accidents, it is highly demanded that the possibility of non-free-opening (hereafter referred to as free opening ratio) should be brought close to 100%.

In addition, the non-free-opening causes a lot of problems in operation at continuous casting facilities today.

Also, it is required that a sintered layer of an appropriate thickness is formed quickly by molten steel at a surface of the filler for the ladle tap hole valve. This is because a filler with no sintered layer will be penetrated by molten steel and a layer of the filler penetrated by the molten steel could cause non-free-opening.

Conventional fillers for a ladle tap hole valve are disclosed in, for examples, Japanese Unexamined Patent Publication No. SHO 62(1987)-244570, Japanese Unexamined Patent Publication No. HEI 1(1989)-180776, and Japanese Patent No. 3056260 granted to present inventors and others.

Japanese Unexamined Patent Publication No. SHO 62(1987)-244570 discloses a filler for a ladle tap hole valve as a mixture of different kinds of silica sand containing 96 mass % or more of SiO₂ and 2.0 mass % or less of Al₂O₃, the mixture composed of 60 to 75 mass % of silica sand having a particle size distribution of 0.71 to 1.68 mm, 25 to 40 mass % of silica sand having a particle size distribution of 0.10 to 0.71 mm, and 5 mass % or less of silica sand having a particle size distribution of less than 0.1 mm.

Japanese Unexamined Patent Publication No. HEI 1(1989)-180776 discloses a filler for a ladle tap hole valve having a particle size distribution of 2.38 to 0.125 mm and a voidage of 25 to 50%. Even such a conventional filler sometimes causes the non-free-opening, and is not fully satisfactory.

Japanese Patent No. 3056260, granted to the present inventors and others, proposes a filler for a ladle tap hole valve comprising 70 to 90 mass % of chromite sand and 10 to 30 mass % of silica sand, from the standpoint that use of chromite sand is preferable in forming an appropriate sintered layer.

However, there is a trend to avoid the use of chromite sand in a steelmaking process on fears that the use of chromite sand in such a large quantity as described in the above patent could cause a chromium (VI) pollution at high temperatures. For this reason, it is required that the minimum usage of the chromite sand for a filler for a ladle tap hole valve.

### Disclosure of Invention

As a result of consideration of these circumstances, the present inventors have unexpectedly found that adding feldspar to a filler for a ladle tap hole valve containing silica sand and chromite sand is able to adjust the thickness of the sintered layer, thereby to reach the present invention.

According to the present invention, a filler for a ladle tap hole valve, characterized by comprising a sand and a feldspar to be externally added and mixed together so that the total quantity of alkalis in the filler is 0.3 to 1.5 mass %, the feldspar having a particle size distribution of 0.3 to 1.7 mm, the sand being composed of 40 to 100 mass % of silica sand having a particle size distribution of 0.3 to 1.7 mm and 60 to 0 mass % of chromite sand having a particle size distribution of 0.1 to 0.85 mm, is provided.

### Brief Description of Drawings

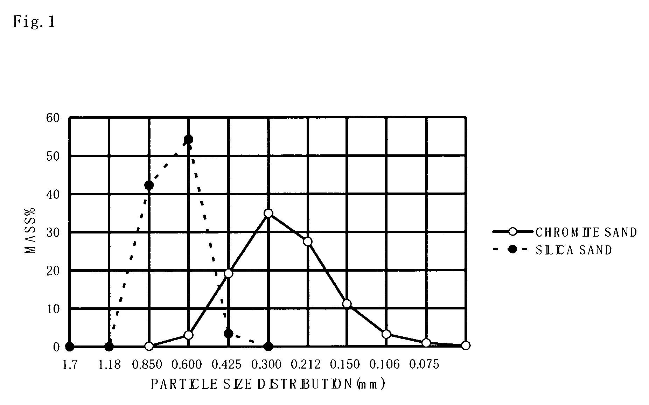

Fig. 1 is a graph showing particle size distributions of chromite sand and silica sand constituting a filler for a ladle tap hole valve which have been used in Example 2.

### Best Mode for Carrying Out the Invention

A filler for a ladle tap hole valve (hereafter, referred to as filler) of the present invention contains silica sand, chromite sand and feldspar having a specific particle size distribution respectively, and contains a specific total quantity of alkalis. The term "total quantity of alkalis" used in this specification means the sum total of the quantities of K₂O and Na₂O contained in the filler as a whole.

The silica sand used in the present invention has a particle size distribution of 0.3 to 1.7 mm, preferably 0.6 to 1.7 mm, more preferably 0.9 to 1.5 mm. The lower limit of the particle size distribution is set to be 0.3 mm because, if the filler has a particle size distribution of less than 0.3 mm, the thickness of the sintered layer is increased and such thick sintered layer causes the non-free-opening when molten steel is poured. The upper limit of the particle size distribution is set to 1.7 mm because, if the filler has a particle size distribution of more than 1.7 mm, the filler is penetrated by the molten steel and the molten steel is mixed with the silica sand and solidified, such solidified mixture also causes the non-free-opening. In the present invention, the silica sand may be a mixture of different kinds of silica sand having different particle size distributions within the above range. Especially when the silica sand is a mixture of silica sand having a particle size distribution of 1.2 to 1.7 mm, silica sand having a particle size distribution of 0.9 to 1.2 mm and silica sand having a particle size distribution of 0.3 to 0.9 mm, the filler can have an increased packing density to prevent molten steel from penetrating and form the sintered layer of an appropriate thickness. The silica sand is desirably composed of substantially 100 mass % of silica sand having a particle size distribution of 0.425 to 1.18 mm.

The particle size distribution in this specification means a value determined in accordance with the particle size distribution test of a foundry sand (Z2602) of Japanese Industrial Standard (JIS). To explain the outline of this test, in the case of the silica sand, a sieve of nominal mesh size of 1.7 mm is put on a sieve of nominal mesh size of 0.3 mm; the silica sand is put on the sieve of 1.7 mesh and subjected to a screen classifier such as a low-tap-type screening machine; the silica sand remaining between the two sieves is regarded as the silica sand in the present invention.

The chromite sand and feldspar having the particle size distributions according to the present invention to be mentioned later are obtained in the same manner except that the nominal mesh size of the sieves is changed.

The silica sand has a particle shape coefficient of 1.4 or less, preferably 1.2 to 1.4. The particle shape coefficient of 1.4 or less leads to the decrease of packing density and prevents the molten steel penetration to filler. That is, as the particle shape coefficient decreases, the packing density increases and thus voids within the nozzle lessen, whereby the molten steel penetration to filler decreases. The percentage of voids formed in the filler is preferably 30 to 35% in terms of voidage.

The particle shape coefficient in this specification means a value calculated by using a sand surface area analyzer (manufactured by George Fisher). That is, the particle shape coefficient is obtained by dividing actual surface area per gram by theoretical surface area. The theoretical surface area is a surface area when all the particles are assumed to be shaped in sphere. Therefore, the closer the particle shape coefficient is to 1, the nearer to sphere the shape of the particles is.

The silica sand contains 95 mass % or more, preferably 96 mass % or more, of SiO₂.

The silica sand in the present invention is not particularly limited and may be natural silica sand, provided that it satisfies the above-mentioned particle size distribution, particle shape coefficient and SiO₂ content.

Though the chemical components of the silica sand differ depending on its producing district, the silica sand contains 90 to 99 mass % of SiO₂. Silica sand of Japan origin in particular contains 90 to 97 mass % of SiO₂, and silica sand of foreign origin contains 95 to 99.8 mass % of SiO₂.

Since natural silica sand is diverse in contents of chemical components depending on its producing district as explained above, it is desirable to mix different kinds of silica sand properly so that the silica sand satisfies the above-mentioned particle size distribution, particle shape coefficient and SiO₂ content.

Next, the chromite sand used in the present invention has a particle size distribution of 0.1 to 0.85 mm, preferably 0.3 to 0.6 mm. The content of the chromite sand is 0 to 60 mass %. Depending on operational conditions of the steelmaking process, the filler may be composed of 100 mass % of silica sand without any chromite sand.

When the chromite sand has a particle size distribution of less than 0.1 mm, the particle size of the chromite sand is smaller than the diameter of a void defined among particles of the silica sand, which makes difficult homogeneous distribution of particles of the silica sand.

On the other hand, it is not preferable that the chromite sand has a particle size distribution of 0.85 mm or more, because the filler has a low packing density to allow more molten steel to penetrate voids and solidify, resulting in a firm sintered layer.

Especially, it is desirable that the chromite sand contains 95 mass % or more of sand having a particle size distribution of 0.15 to 0.85 mm and 65 mass % or more of sand having a particle size distribution of 0.212 to 0.425 mm. In addition, it is desirable that the chromite sand contains 5 mass % or less of sand having a particle size distribution of less than 0.15 mm because, if the percentage of the sand having a particle size distribution of less than 0.15 mm exceeds 5%, the blocking in nozzle is likely to occur because the filler becomes more liable to sinter.

The chromite sand used in the present invention is known to exhibit fire resistance up to about 2,150°C. The chromite sand becomes more liable to sinter as the particle diameter becomes smaller.

The chromite sand is not particularly limited, provided that it satisfies the above-mentioned particle size distribution. Various kinds of chromite sand are found mainly in South Africa and have applications in foundry, metallurgy and chemistry. The chromite sand of the present invention can be any kind of chromite sand having any such application, and may be natural sand as it is.

The mixing ratio of the silica sand : the chromite sand is 40 to 100 mass % : 60 to 0 mass %, preferably 50 to 100 mass % : 50 to 0 mass %. By minimizing the mixing percentage of the chromite sand to filler, use of chromite sand that might cause industrial pollution such as the chromium (VI) can be minimized. In addition, heavy use of silica sand that is relatively inexpensive can reduce the steel making cost.

In the present invention, the feldspar is added to the filler for the purpose of adjusting the quantity of alkalis. The silica sand usually contains a specific quantity of alkalis. Compared a filler in which the quantity of alkalis in the silica sand is adjusted to the range of the present invention with no feldspar being added with a filler in which the quantity of alkalis is adjusted to the range of the present invention with the feldspar being added, the latter is more preferable in the ability to adjust the thickness of the sintered layer, provided that the fillers have the same quantity of alkalis.

The feldspar used in the present invention has a particle size distribution of 0.3 to 1.7 mm, preferably of 0.5 to 1.0 mm. The feldspar is added externally in a quantity adjusted according to the mixing percentages of the silica sand and the chromite sand so that the total quantity of alkalis as the sum total of the quantities of K₂O and Na₂O in the filler as a whole is 0.3 to 1.5 mass %, preferably 0.3 to 1.2 mass %, whereby the thickness of the sintered layer can be appropriately adjusted.

The feldspar added is preferably potassium feldspar. Potassium feldspar includes orthoclase, microcline sanidine, adularia and the like. However, the feldspar is not limited to these. Further, these may be used alone or in combination of two or more.

The particle size distribution of the feldspar is limited to 0.3 to 1.7 mm in the present invention because if the feldspar has a particle size distribution of less than 0.3 mm, the filler abruptly forms a firm sintered layer, which causes non-free-opening. On the other hand, if the feldspar has a particle size distribution of more than 1.7 mm, it takes much longer time to form the sintered layer of appropriate thickness. Therefore the sintered layer becomes so week and the molten steel penetrates to filler easily. The penetration of molten steel causes non-free-opening.

Since the silica sand has alkali contents, the total quantity of alkalis is properly adjusted according to the quantity of alkalis contained in the silica sand so that the total quantity of alkalis falls within the range of the present invention.

In addition, in order to regulate the quality of the silica sand, chromite sand and feldspar, they may be subjected to grinding. Of course, ground sand and unground sand may be used as a mixture of two or more.

The grinding may be performed by a conventional dry or wet method.

The dry method includes methods by use of a pneumatic scrubber such as a sand reclaimer wherein material sand is blown up with a high-speed air current in the apparatus and is let collide against a collision board so as to be grounded by impact and friction of sand particles to one another, a high-speed scrubber wherein material sand is poured on a rapidly rotating rotor and is grounded by impact and friction generated between falling sand particles and sand particles projected by centrifugal force, and a high-speed agitator such as an agitation mill wherein sand is ground by friction of sand particles to one another.

The wet method includes a method by use of a trough-type grinder wherein sand is ground by friction of sand particles to one another in a trough with a rotating blade.

Among these grinding methods, the wet method is preferred; for water used at the grinding can simultaneously wash away smaller sand particles than the desired particle size. However, the sand of the invention may be obtained by the dry method combined with water washing.

In general, it is known that if a filler has a high wettability (reciprocal of a molten- steel repellency value of the filler) as a factor related to molten steel other than fire resistance, the filler is likely to form the sintered layer that causes the non-free-opening.

As a method for improving the wettability, there is known a method of external addition of powdery carbon (e.g., flake graphite, earthy graphite, carbon black, etc.) to a filler for a nozzle is known. More specifically, there is a method of simply mixing carbon (Japanese Unexamined Patent Publication No. HEI 6(1994)-71424), a method of carbon adhesion to sand particles with use of an adhesive as a binder (Japanese Unexamined Patent Publication No. HEI 10(1998)-58126). Furthermore, there is a carbon coated or adhered filler by static electricity that is proposed by present inventors. In this method, after generation of static electricity by stirring filler, carbon is coated or adhered to filler by adding carbon and mixing it with filler. (Japanese Unexamined Patent Publication No. 2000-317625).

In the present invention as well, at least one of the silica sand, chromite sand and feldspar may be coated with carbon black statically. The carbon black is not particularly limited, but may be a conventional one. In terms of sanitation and the performance and cost of the filler, the particulate carbon black is preferable. The particulate carbon black is preferably obtained by a wet method or dry method, and has preferably a particle size distribution of 2000 µm or less, more preferably 250 to 2000 µm.

The method of statically coating the surface of at least one of the silica sand, chromite sand and feldspar with the carbon black is not particularly limited, but there may be a statically coating method that carbon black is added and mixed with filler after currently or separately stirring and charging the silica sand, chromite sand and feldspar by the different or same apparatuses, for example, by ribbon-type blender. Here, it is desired that the electrostatic potential of -0.1 kv or more by stirring, preferably -0.1 to -0.05 kv, across the filler. When an electric potential is potential of -0.1 kv or more, the filler contains substantially no free carbon. Also, the stirring allows all or part of the surface of the filler to be statically coated with the carbon black.

The carbon black is used in such an amount that lessens generation of free carbon and that enables the filler to obtain desired properties. More specifically, since the quantity of alkalis in the silica sand used in the present invention is 0.3 to 1.5%, the carbon black is added in 0.3 to 1.0 mass %, preferably 0.5 to 0.9 mass % with respect to the filler.

When the carbon black is added in more than 1.0 mass % with respect to the filler, the sintered layer is hardly formed by the action of carbon, which causes the non-free-opening and, in the case of manufacture of a ultra-low carbon steel, carburization is accelerated, the chemical composition problem of the molten steel occurred.

The shape of the ladle tap hole valve, type of the molten steel and the like are not particularly limited for using presently invented filler. The silica sand, chromite sand and feldspar, statically coated or uncoated with the carbon black, may be separately filled in the ladle tap hole valve. However, since these materials have a good mixing property, it is preferable that they are uniformly mixed and filled to improve workability.

### EXAMPLES

The present invention will hereinafter be described in detail showing examples. These examples, however, are not intended to limit the present invention.

Tables 1 to 3 respectively show chemical compositions of the silica sand, chromite sand and feldspar, used in the following Examples.

**Table 1**

| Composition | Mass % |
|---|---|
| SiO₂ | 97.69 |
| Al₂O₃ | 0.85 |
| Fe₂O₃ | 0.70 |
| CaO | 0.16 |
| MgO | 0.27 |
| Na₂O | 0.07 |
| K₂O | 0.23 |

**Table 2**

| Composition | Mass % |
|---|---|
| Cr₂O₃ | 47.03 |
| Fe₂O₃ | 26.94 |
| Al₂O₃ | 14.23 |
| MgO | 9.49 |
| SiO₂ | 0.48 |

**Table 3**

| Composition | Mass % |
|---|---|
| SiO₂ | 74.7 |
| Al₂O₃ | 13.3 |
| Na₂O | 2.7 |
| K₂O | 7.5 |

In feldspar of a chemical composition shown in Table 3, the sum total of the quantities of K₂O and Na₂O which are alkalis is 10.2 mass %. Accordingly, adding one mass % of the feldspar to the filler increases the total quantity of alkalis by 0.102 mass %.

### Example 1

A hole of an internal diameter of 50 mm and a depth of 30 mm was formed at the bottom of a 30 kg-capacity high-frequency furnace as a ladle for molten steel, and various kinds of silica sand having different particle size distributions were filled as fillers in the hole. Then, molten steel at 1,650 °C was poured and held in the ladle for one hour, and the thickness of a sintered layer was measured. Table 4 shows the relationship between the percentage of silica sand having a particle size distribution of less than 0.3 mm and the thickness of the sintered layer, and Table 5 shows the relationship between the percentage of silica sand having a particle size distribution of more than 1.7 mm and the thickness of the sintered layer. The particle shape coefficient of the silica sand used is 1.21.

**Table 4**

| Percentage of silica sand of less than 0.3 mm (mass %) | Thickness of sintered layer (mm) |
|---|---|
| 0 | 2.0 |
| 5 | 3.5 |
| 10 | 5.8 |
| 20 | 12.8 |

**Table 5**

| Percentage of silica sand of more than 1.7 mm (mass %) | Thickness of sintered layer (mm) |
|---|---|
| 0 | 2.8 |
| 5 | 4.7 |
| 10 | 7.0 |
| 20 | 15.4 |

Table 6 shows the relationship between the particle shape coefficient of various kinds of silica sand and the thickness of the sintered layer. This relationship was obtained as follows. A hole of an internal diameter of 30 mm and a depth of 30 mm was formed at the bottom of a sand mold of an internal diameter of 150 mm and a depth of 100 mm, and each kind of silica sand was filled in the hole. Then, molten steel was poured in the sand mold and cooled. After that, the thickness of a layer of the silica sand penetrated by molten steel (thickness of a penetrated layer) was measured. The particle size distribution of the silica sand used is 0.3 to 1.7 mm.

**Table 6**

| Particle shape coefficient | Thickness of penetrated layer (mm) |
|---|---|
| 1.2 | 5.7 |
| 1.3 | 5.9 |
| 1.4 | 6.1 |
| 1.5 | 9.6 |
| 1.6 | 11.4 |
| 1.7 | 13.4 |

As clearly shown in Table 4, the thickness of the sintered layer increased as the percentage of the silica sand having a particle size distribution of less than 0.3 mm increased. As clearly shown in Table 5, the thickness of the sintered layer increased as the percentage of the silica sand having a particle size distribution of more than 1.7 mm increased. Such increases in the thickness of the sintered layer mean increases the possibility of the non-free-opening caused by the sintering of the silica sand at the pouring of the molten steel.

As clearly shown in Table 6, on reaching 1.4 of a particle shape coefficient, the thickness of the layer penetrated by the molten steel increased as the particle shape coefficient increased. This means that when the particle shape coefficient is greater than 1.4, the penetration of molten steel is occurred easily due to the packing density decrease and as a result, non-free-opening occurs easily.

Next, by using the same method that uses the high-frequency furnace, the relationship between the particle size distribution of various kinds of feldspar and the thickness of the sintered layer was attempted to be determined. In this experiment, 9 mass % of feldspar was added to silica sand so that the alkali quantity was set to 1.2 mass %. Five tests were conducted for each of Comparative Examples 1 and 2 and Example 1 and the results were obtained. Table 7 shows the particle size distribution of the feldspar and the results. The particle size distribution and particle shape coefficient of silica sand are 0.3 to 1.7 mm and 1.21, respectively.

**Table 7**

| | Comp. Ex. 1 | Comp. Ex. 2 | Ex. 1 |
|---|---|---|---|
| Particle Size Distribution of Feldspar | Mass % | Mass % | Mass % |
| Less than 0.4 mm | 20 | 0 | 0 |
| 0.4 to 1.2 mm | 80 | 80 | 100 |
| More than 1.2 mm | 0 | 20 | 0 |
| Thickness of Sintered Layer (mm) | 20 to 28 | 10 to 17 | 12 to 13 |

Table 8 shows the particle size distribution of the feldspar used in Example 1.

**Table 8**

| Particle Size Distribution (mm) | Mass % |
|---|---|
| 1.7 and more | 0 |
| 1.18 and more | 23.3 |
| 0.85 and more | 38.3 |
| 0.6 and more | 33.5 |
| 0.425 and more | 4.8 |
| 0.3 and more | 0.1 |

As clearly shown in Table 7, it was found that by using feldspar having a particle size distribution of 0.3 to 1.7 mm, the variation in the thickness of the sintered layer can be reduced, whereby the non-free-opening can be inhibited.

### Example 2

As shown in Table 9, fillers as a mixture of silica sand, chromite sand and feldspar were prepared. Each filler was filled in a ladle tap hole valve provided in a ladle of 250t, and molten steel at 1680 °C was poured into the ladle and held therein for 1 to 3 hours. Then, the molten steel was tapped from the ladle tap hole valve. This procedure was repeated 200 times, and the number of free-opening was counted. The counted number of it was divided by 200 to obtain a free-opening ratio. Table 9 shows the free-opening ratios of the fillers. The particle size distributions of silica sand, chromite sand and feldspar are 0.3 to 1.7 mm, 0.1 to 0.85 mm and 0.3 to 1.7 mm, respectively. Fig. 1 is a graph showing particle size distributions of the chromite sand and silica sand. Table 8 shows specific particle size distribution of the feldspar.

**Table 9**

| Composition of Filler (mass %) | | | Alkali Quantity (mass %) | Non-blocking Ratio (%) |
|---|---|---|---|---|
| Silica Sand | Chromite Sand | Quantity of Feldspar Added | | |
| 100 | 0 | 0 | 0.3 | 98.3 |
| 100 | 0 | 2.0 | 0.5 | 98.8 |
| 100 | 0 | 9.0 | 1.2 | 100.0 |
| 100 | 0 | 12.0 | 1.5 | 99.1 |
| 80 | 20 | 0.6 | 0.3 | 98.4 |
| 80 | 20 | 2.5 | 0.5 | 98.8 |
| 80 | 20 | 6.5 | 0.9 | 100.0 |
| 80 | 20 | 9.8 | 1.2 | 98.3 |
| 60 | 40 | 1.2 | 0.3 | 98.8 |
| 60 | 40 | 3.2 | 0.4 | 99.1 |
| 60 | 40 | 4.2 | 0.6 | 100.0 |
| 60 | 40 | 8.2 | 1.0 | 98.3 |
| 40 | 60 | 1.8 | 0.3 | 99.0 |
| 40 | 60 | 2.8 | 0.4 | 100.0 |
| 40 | 60 | 3.8 | 0.5 | 98.1 |

As clearly shown in Table 9, it was found that by using the filler of the present invention, the non-free-opening can be inhibited, which indicates that a crucial problem in stable operation can be solved. Also, the free-opening ratio reached 100% by addition of 9.0 mass % of the feldspar when the filler comprised 100 mass % of the silica sand, by addition of 6.5 mass % of the feldspar when the filler was composed of 80 mass % of the silica sand, by 4.2 mass % of the feldspar when the filler was composed of 60 mass % of the silica sand, and by addition of 2.8 mass % of the feldspar when the filler was composed of 40 mass % of the silica sand.

The filler according to the present invention which contains 40 to 100 mass % of the silica sand, 60 to 0 mass % of the chromite sand, and the feldspar, is capable of being hardly melt and hardly sintered by the molten steel poured into the ladle and hardly penetrated by the molten steel, and allows for proper adjustment of the thickness of the sintered layer, whereby the non-free-opening in the ladle tap hole valve can be quite satisfactorily and effectively inhibited.

## Claims

1. A filler for a ladle tap hole valve, **characterized in that** it comprises a sand and a feldspar to be externally added and mixed together so that the total quantity of alkalis in the filler is 0.3 to 1.5 mass %, the feldspar having a particle size distribution of 0.3 to 1.7 mm, the sand being composed of 40 to 100 mass % of silica sand having a particle size distribution of 0.3 to 1.7 mm and of 60 to 0 mass % of chromite sand having a particle size distribution of 0.1 to 0.85 mm.

2. The filler for a ladle tap hole valve of claim 1, wherein the silica sand has a particle shape coefficient of 1.4 or less.

3. The filler for a ladle tap hole valve of claim 1, wherein at least one of the silica sand, the chromite sand and the feldspar has a surface statically coated with 0.3 to 1.0 mass % of externally added carbon black.

4. The filler for a ladle tap hole valve of claim 1, wherein the feldspar is potassium feldspar.

5. The filler for a ladle tap hole valve of claim 1, wherein the silica sand contains 95 mass % or more of SiO₂.

6. The filler for a ladle tap hole valve of claim 1, wherein the chromite sand contains 95 mass % or more of sand having a particle size distribution of 0.15 to 0.85 mm and 65 mass % or more of sand having a particle size distribution of 0.212 to 0.425 mm, and wherein the silica sand is composed of 100 mass % of sand having a particle size distribution of 0.425 to 1.18 mm.

7. The filler for a ladle tap hole valve of claim 1, wherein the chromite sand contains 5 mass % or less of sand having a particle size distribution of less than 0.15 mm.
